# EUROPÄISCHE PATENTSCHRIFT

(11) **EP 1 403 672 B1**
(45) Veröffentlichungstag und Bekanntmachung des Hinweises auf die Patenterteilung: **30.08.2006**
(21) Anmeldenummer: 03021422.5
(22) Anmeldetag: 23.09.2003
(51) Int. Cl.: G02B 7/16, G02B 7/00, G02B 7/18, G02B 7/182

(54) **Vorrichtung und Verfahren zum Positionieren eines optischen Bauteils**
Device and method for positioning an optical element
Dispositif et méthode de positionnement d'un élément optique

(30) Priorität: 26.09.2002 DE 10245170
(43) Veröffentlichungstag der Anmeldung: 31.03.2004
(73) Patentinhaber: Leica Microsystems CMS GmbH, 35578 Wetzlar (DE)
(72) Erfinder: Rentzsch, Wolfgang, 35576 Wetzlar (DE)
(74) Vertreter: Reichert, Werner Franz

(56) Entgegenhaltungen:
- DE-A- 3 711 843
- US-A- 5 648 869
- PATENT ABSTRACTS OF JAPAN vol. 2000, no. 12, 3. Januar 2001 (2001-01-03) -& JP 2000 266986 A (OLYMPUS OPTICAL CO LTD), 29. September 2000 (2000-09-29)

## Beschreibung

Die vorliegende Erfindung betrifft eine Vorrichtung und ein Verfahren zum Positionieren eines optischen Bauteils, wobei mehrere optische Bauteile in einer Aufnahmeeinrichtung angeordnet sind, wobei die Aufnahmeeinrichtung um eine Achse drehbar oder entlang einer Richtung derart bewegbar ist, dass ein optisches Bauteil positionierbar und die Aufnahmeeinrichtung in einer hierzu entsprechenden Arretierstellung arretierbar ist, wobei eine Codiereinrichtung mit Codiermitteln und mehrere die Codiermittel detektierende Detektoren vorgesehen sind, wobei die Codiereinrichtung oder die Detektoren der Aufnahmeeinrichtung zugeordnet ist bzw. sind und wobei die Detektoren an räumlich unterschiedlichen Stellen Codiermittel detektieren,

Vorrichtungen der gattungsbildenden Art sind insbesondere aus dem Gebiet der Mikroskopie bekannt, wo solche Vorrichtungen als Objektivrevolver oder als Filtermagazine eingesetzt werden. Hierbei ist in dem einen Fall die Aufnahmeeinrichtung ein um eine Achse drehbar gelagerter Revolver, in dem verschiedene Mikroskopobjektive eingesetzt werden. In dem anderen Fall, insbesondere bei der Fluoreszenzmikroskopie, ist die Aufnahmeeinrichtung als positionierbares Filtermagazin ausgebildet, das ebenfalls - gegebenenfalls motorisch - um eine Achse drehbar oder in linearer Richtung bewegbar ist. Falls der Revolver motorisch angetrieben wird, aber auch im Fall einer manuellen Drehung des Revolvers, ist es beispielsweise zur Einstellung von Beleuchtungs-Aperturblenden oder Filtern im optischen Strahlengang des Mikroskops für die Mikroskopsteuerung erforderlich, bestimmen zu können, in welcher Position sich der Revolver momentan befindet und somit bekannt ist, welches Objektiv im Strahlengang des Mikroskops positioniert ist.

Hierzu sind aus dem Stand der Technik unterschiedliche Codier- und Detektionsmittel bekannt. So beschreibt die JP (A) 2000266986 eine Vorrichtung zum Positionieren eines optischen Bauteils, beispielsweise eines Fluoreszenzwürfels oder Objektivs. Sie umfasst eine um eine Achse drehbare Aufnahmeeinrichtung, an der mehrere optische Bauteile angeordnet sind. Mit einer Arretiereinrichtung mit mehreren Arretierstellungen ist das optische Bauteil durch Anfahren in eine entsprechende Arretierstellung positionierbar. Der Aufnahmeeinrichtung sind zur Erfassung ihrer Bewegung eine Codiereinrichtung mit mehreren Codiermitteln und mehrere die Codiermittel detektierende Detektoren zugeordnet, welche die Codiermittel an räumlich unterschiedlichen Stellen detektieren. Die Montage und Justage der speziell angeordneten Codiermittel und der verschiedenen Detektoren ist wegen der erforderlichen Präzision aufwendig und teuer.

Auch aus der DE 37 11 843 A1 ist eine Revolver-Dreheinrichtung für optische Bauelemente bekannt. Zur Detektion der aktuellen Stellung der Revolver-Dreheinrichtung sind dort insgesamt fünf Sensoren bzw. Detektoren vorgesehen, die unterschiedliche Codiermittel der dort vorgesehenen Codiereinrichtung detektieren. Die Detektoren sind derart angeordnet, dass sie die Codiereinrichtung jeweils an radial und/oder umfangsmäßig unterschiedlichen Stellen detektieren. Die Detektoren und Codiermittel umfassen hierbei einerseits eine Lichtschranke, die einen Schlitz detektiert und andererseits vier Lichtschranken, die Licht detektieren, das an hochreflektierenden streifenförmigen Beschichtungen reflektiert wird, die an der Revolver-Dreheinrichtung angeordnet sind. Die Codiermittel bzw. die Codiereinrichtung ist hierbei der Aufnahmeeinrichtung zugeordnet und die Detektoren sind ortsfest am Mikroskopstativ angebracht. Die Detektion umfasst hierbei auch das Erfassen der momentanen Drehrichtung. Mit diesen Codier- und Detektionsmitteln ist ein hoher Bauteilaufwand verbunden, der mit einer zeitaufwendigen Fertigung und Funktionsprüfung einhergeht. Somit sind diese Codier- und Detektionsmittel teuer, da insbesondere viele Bauteile erforderlich sind, die montiert und justiert werden müssen.

Der vorliegenden Erfindung liegt daher die Aufgabe zugrunde, eine Vorrichtung und ein Verfahren der gattungsbildenden Art derart anzugeben und weiterzubilden, dass eine Detektion der Position der Aufnahmeeinrichtung bei verringertem Bauteilaufwand der Codier- und Detektionsmittel und einer damit verbundenen verringerten Fertigungsdauer ermöglicht ist.

Die erfindungsgemäße Vorrichtung der gattungsbildenden Art löst die voranstehende Aufgabe durch die Merkmale des Patentanspruchs 1. Danach ist eine solche Vorrichtung **dadurch gekennzeichnet**, dass die Codiereinrichtung derart ausgebildet ist, dass sie genau zwei Detektoren aufweist, die einerseits gleichzeitig Codiermittel detektieren, wenn die Aufnahmeeinrichtung sich in einer Arretierstellung befindet, und dass andererseits nur jeweils einer der zwei Detektoren Codiermittel detektiert, wenn die Aufnahmeeinrichtung sich in einem Bereich zwischen zwei benachbarten Arretierstellungen befindet, wobei in jeder Arretierstellung der Aufnahmeeinrichtung an den von den zwei Detektoren detektierten Stellen der Codiereinrichtung ein Codiermittel vorgesehen ist, das eine wirksame Breite B aufweist, die größer oder gleich dem wirksamen Abstand D der beiden Detektoren ist, das heißt B ≥ D.

Erfindungsgemäß ist erkannt worden, dass eine Detektion der momentanen Position der Aufnahmeeinrichtung mit lediglich zwei Detektoren erfolgen kann. Hierzu ist die Codiereinrichtung derart ausgebildet, dass die zwei Detektoren gleichzeitig Codiermittel detektieren, wenn die Aufnahmeeinrichtung sich in einer Arretierstellung befindet. Falls die Aufnahmeeinrichtung sich in einem Bereich zwischen zwei benachbarten Arretierstellungen befindet, ist die Codiereinrichtung an den Stellen, an denen die zwei Detektoren dann detektieren derart ausgebildet, dass nur jeweils einer der zwei Detektoren Codiermittel detektiert. Die Codiereinrichtung wird sich dann zwischen zwei benachbarten Arretierstellungen befinden, wenn die Aufnahmeeinrichtung manuell oder motorbetrieben gedreht beziehungsweise bewegt wird, beispielsweise um ein anderes optisches Bauteil im optischen Strahlengang eines Mikroskops zu positionieren. Durch diese Ausgestaltung der Codiereinrichtung kann somit festgestellt werden, ob die Aufnahmeeinrichtung sich in einer Arretierstellung oder in einem Bereich zwischen zwei benachbarten Arretierstellungen befindet.

Eine Feststellung, in welcher der vorgesehenen Arretierstellung die Aufnahmeeinrichtung ist, kann durch die räumliche Anordnung bzw. die Art der Ausgestaltung der Codiermittel der Codiereinrichtung getroffen werden. So könnte beispielsweise durch unterschiedlich reflektierend ausgestaltete Codiermittel Rückschlüsse auf die momentane Arretierstellung der Aufnahmeeinrichtung geschlossen werden, indem das von dem ersten Detektor detektierte Codiermittel einen hohen Reflexionsgrad und das vom zweiten Detektor detektierte Codiermittel einen mittleren oder geringen Reflexionsgrad aufweist. Hierbei kann lediglich ein Codiermittel vorgesehen sein, das nämlich zwei Bereiche mit unterschiedlichem Reflexionsgrad aufweist. Wenn nun das von den zwei Detektoren detektierte Codiermittel in jeder einer Arretierstellung entsprechenden Stellung eine spezifische Reflexionsgradkombination aufweist, kann eine eindeutige Zuordnung der momentan vorliegenden Arretierstellung der Aufnahmeeinrichtung erfolgen und somit ist bekannt, welches der optischen Bauteile momentan positioniert ist.

In ähnlicher Weise können die Codiermittel in dem Bereich der Codiereinrichtung angeordnet werden, in dem die Detektoren detektieren, wenn sich die Aufnahmeeinrichtung zwischen zwei benachbarten Arretierstellungen befindet. So könnten beispielsweise in jedem dieser Bereiche eine unterschiedliche Anzahl von Codiermitteln angeordnet sein, die gegebenenfalls einen unterschiedlichen Reflexions-, Transmissionsgrad und/oder ein unterschiedliches Ausmaß aufweisen, so dass über die Detektion der Anzahl und gegebenenfalls der Art der Codiermittel Rückschlüsse darüber möglich sind, in welchem der Bereiche zwischen zwei benachbarten Arretierstellungen die Aufnahmeeinrichtung sich momentan befindet.

Somit kann in erfindungsgemäßer Weise durch die räumliche Anordnung lediglich zweier Detektoren und eine entsprechende Ausgestaltung der Codiereinrichtung in ganz besonders vorteilhafter Weise eines von mehreren optischen Bauteilen positioniert und hierbei festgestellt werden, um welches optisches Bauteil es sich hierbei handelt. Die Codiereinrichtung könnte beispielsweise in Form eines Rings oder einer Schiene als einteiliges Bauteil ausgeführt sein, das in besonders vorteilhafter Weise einfach zu montieren bzw. zu justieren ist. Letztendlich ist durch diese Maßnahme der Bauteilaufwand für die Codier- und Detektionsmittel und die hierfür erforderliche Fertigungsdauer ganz erheblich reduziert.

In einer Ausführungsform könnten die Codiermittel elektronisch detektierbar ausgeführt sein. Dies könnte beispielsweise mit Hilfe von Detektoren erfolgen, die als Mikroschalter ausgeführt sind und die von den Codiermitteln der Codiereinrichtung betätigt werden, die in Form von Nasen oder Erhebungen ausgebildet sind. Weiterhin könnten die Detektoren durch Schleifkontakte gebildet werden, die entsprechend angeordnete Codiermittel der Codiereinrichtung detektieren, die in Form von elektrisch leitenden Streifen oder Bereichen ausgebildet sind. Eine elektronische Detektion der Codiermittel könnte auch mittels kapazitiver oder induktiver Sensoren erfolgen. Hierbei sind entsprechende kapazitive oder induktive Bauteile als Codiermittel der Codiereinrichtung vorzusehen, die von entsprechend ausgebildeten Detektoren detektiert werden.

In einer alternativen Ausführungsform könnten die Codiermittel magnetisch detektiert werden. Als Detektoren würden sich in diesem Fall - wie auch bei der aus DE 37 11 843 A1 bekannten Revolver-Dreheinrichtung - Hall-Sensoren anbieten, die magnetisch ausgebildete Codiermittel detektieren. So könnten die Codiermittel hierbei Permanentmagnete umfassen, die vorzugsweise im wesentlichen streifenförmig ausgebildet sind und die im wesentlichen quer zur Bewegungsrichtung der Aufnahmeeinrichtung angeordnet sind. Hierdurch können einerseits viele Permanentmagnete auf der Codiereinrichtung angeordnet werden. Andererseits ist eine Detektion der streifenförmig ausgebildeten Permanentmagnete durch die Hall-Sensoren weitgehend fehlerfrei möglich, da diese quer zur Bewegungsrichtung der Aufnahmeeinrichtung angeordnet sind und bei einer Bewegung der Aufnahmeeinrichtung sich mit ihrer schmalen Seite an den Detektoren vorbeibewegen, so dass eindeutig auswertbare Signale von den Detektoren erzeugt werden. Die elektronische oder magnetische Detektion der Codiermittel ist insbesondere deshalb vorteilhaft, weil hierzu keine Lichtquelle - wie zum Beispiel bei einer Detektion mittels Lichtschranken - erforderlich ist, die beispielsweise mikroskopische Abbildungen durch das an den Codiermitteln gestreute oder reflektierte Licht der Lichtquelle störend überlagern.

In einer ganz besonders bevorzugten Ausführungsform sind die Codiermittel optisch detektierbar. Hierzu bieten sich Lichtschranken an, die die Codiermittel entsprechend detektieren. Als Lichtschranke im Sinn dieser Erfindung ist eine Lichtquelle und ein oder mehrere Detektoren zu verstehen, die jeweils das Licht der Lichtquelle detektieren, dass an der Codiereinrichtung reflektiert, gebrochen, gebeugt oder transmittiert ist. Am einfachsten wird jedoch eine Reflexionslichtschranke oder eine Lichtschranke vorgesehen sein, die Codiermittel detektiert, die zwischen der Lichtquelle und dem Detektor bewegt werden. Da in erfindungsgemäßer Weise zwei Detektoren vorgesehen sind, bietet sich die Verwendung einer Gabellichtschranke oder einer Doppel-Reflexionslichtschranke an. Diese Arten von Lichtschranken umfassen jeweils eine Lichtquelle und zwei das Licht der Lichtquelle detektierende Detektoren und sind fertig konfiguriert als einzelne Baugruppe kommerziell erhältlich.

Bei einer optischen Detektion der Codiermittel bietet es sich an, die Codiermittel als Schlitze, Stege oder reflektierende Bereiche auszubilden. Falls die Codiermittel als Schlitze oder Einkerbungen ausgebildet sind, werden diese zweckmäßigerweise mit einer Gabellichtschranke detektiert. Die Codiermittel könnten auch in Form von Stegen ausgebildet sein, die beispielsweise wie die Sprossen einer Leiter sich über einen entsprechenden Zwischenraum der Codiereinrichtung erstrecken. Somit könnte die Codiereinrichtung beispielsweise als ringförmige Scheibe ausgebildet sein, die der Aufnahmeeinrichtung zugeordnet ist und die Schlitze aufweist. Auf der einen Seite der ringförmigen Scheibe wäre der Teil der Gabellichtschranke anzuordnen, der die Lichtquelle umfasst, und auf der anderen Seite der ringförmigen Scheibe wäre der Teil der Gabellichtschranke anzuordnen, der die zwei Detektoren umfasst. Der Bereich der ringförmigen Scheibe, der die Schlitze aufweist, könnte bezüglich der Aufnahmeeinrichtung radial überstehend angeordnet sein, wenn die Aufnahmeeinrichtung beispielsweise als Objektivrevolver ausgebildet ist. Dann kann die Gabellichtschranke als einheitliche Baugruppe an einer Stelle derart positioniert werden, dass sie den überstehenden Bereich der Codiereinrichtung in radialer Richtung umgreift.

Weiterhin ist es denkbar, dass die Codiermittel als reflektierende Bereiche ausgebildet sind. In diesem Fall wäre eine Detektion mittels einer Doppel-Reflexionslichtschranke zweckmäßig. Hierbei müsste die Codiereinrichtung, die die reflektierenden Bereiche aufweist, nicht radial überstehend an der Aufnahmeeinrichtung angeordnet sein, was in vorteilhafter Weise eine kompakte Bauweise der Aufnahmeeinrichtung ermöglicht. Die als Schlitze oder reflektierende Bereiche ausgebildeten Codiermittel sind vorzugsweise im wesentlichen quer zur Bewegungsrichtung der Aufnahmeeinrichtung angeordnet. Somit handelt es sich insbesondere um schmale, länglich ausgebildete Schlitze oder Bereiche, die erforderlichenfalls in geringem Abstand zueinander angeordnet sein können und entsprechend viel Codiermittel bei einer Bewegung detektiert werden können, wodurch in vorteilhafter Weise eine hohe Detektionsgenauigkeit der Position der Aufnahmeeinrichtung möglich ist.

Bei einer ganz besonders bevorzugten Ausführungsform wird die Lichtquelle der Lichtschranke dann abgeschaltet, wenn die Aufnahmeeinrichtung sich in einer Arretierstellung befindet. Hierdurch kann in vorteilhafter Weise beispielsweise bei einem Fluoreszenzmikroskop eine störende Überlagerung von Streulicht der Lichtquelle der Lichtschranke vermieden werden, das an der Codiereinrichtung oder an den Codiermitteln gestreut wird. Bei der Fluoreszenzmikroskopie kann der zu detektierende Wellenlängenbereich des Fluoreszenzlichts zumindest teilweise mit dem Wellenlängenbereich der Lichtquelle der Lichtschranke übereinstimmen, so dass dieses Streulicht, falls es in den Detektionsstrahlengang des Fluoreszenzmikroskops gelangt, als Fluoreszenzlicht detektiert werden würde. Da die Position der Aufnahmeeinrichtung in einer Arretierstellung nicht andauernd detektiert werden muss, ist ein Abschalten der Lichtquelle der Lichtschranke nicht nachteilhaft und wird üblicherweise nur bei Bedarf einer Positionskontrolle kurzzeitig eingeschaltet.

Im Konkreten ist eine ortsfest angeordnete Arretiereinrichtung vorgesehen, die die Aufnahmeeinrichtung in einer Arretierstellung arretiert. Vorzugsweise erfolgt die Arretierung der Aufnahmeeinrichtung auf mechanischer Basis. Dann kann die Aufnahmeeinrichtung nämlich manuell oder motorbetrieben bewegt beziehungsweise gedreht werden, so dass nicht notwendigerweise eine Arretierung der Aufnahmeeinrichtung durch ein Haltemoment eines Motors erfolgen muss. Eine mit Hilfe eines Motors realisierte Arretierung kann die Aufnahmeeinrichtung unter Umständen nicht genau genug positionieren, jedenfalls dann nicht, wenn die Motorsteuerung relativ einfach ausgebildet ist.

Bei einem Mikroskop ist die Arretiereinrichtung der als Objektivrevolver ausgebildeten Aufnahmeeinrichtung üblicherweise unmittelbar oder mittelbar am Mikroskopstativ ortsfest angeordnet. Die Arretiereinrichtung umfasst eine kraftbeaufschlagt gelagerte Rolle oder Kugel, die aufgrund der Kraftbeaufschlagung in eine an der Aufnahmeeinrichtung vorgesehenen Rastkerbe drückt, wenn die Aufnahmeeinrichtung sich bei einer Arretierstellung befindet und somit die Rolle oder Kugel in die Rastkerbe eingreifen kann. Die Kraftbeaufschlagung der Rolle oder Kugel kann beispielsweise mit einer Feder erfolgen. Vorzugsweise weist die Rastkerbe eine oder zwei Einfangsrampen auf, die einen sogenannten "Einfangbereich" der Arretiereinrichtung definieren. Diese Einfangsrampe könnte im Konkreten als eine Fläche ausgebildet sein, die in einem stumpfen Winkel zur sonstigen Oberfläche der Aufnahmeeinrichtung angeordnet ist, auf der die Rolle oder Kugel im nicht arretierten Zustand abrollt. Falls die Rastkerbe zwei Einfangsrampen aufweist, sind diese beidseitig der mittleren Position der Rastkerbe angeordnet, so dass die Rolle oder die Kugel von beiden Bewegungsrichtungen der Aufnahmeeinrichtung aus eingefangen werden kann. Weiterhin umfasst die Rastkerbe mit ihrem mittleren Bereich zwei Flächen, die derart angeordnet sind, dass die Rolle oder die Kugel im eingerasteten Zustand entweder Linien- oder Punktkontakt mit den zwei Flächen hat. Insoweit ist eine präzise und reproduzierbare Arretierung der Aufnahmeeinrichtung auf mechanischer Basis realisiert.

Grundsätzlich können die beiden Detektoren die Codiermittel der Codiereinrichtung an völlig unterschiedlichen Stellen detektieren, beispielsweise bei einer ringförmig ausgebildeten Codiereinrichtung an zwei gegenüberliegenden Stellen. In diesem Fall werden jedoch - eine optische Detektion der Codiermittel vorausgesetzt - zwei Lichtquellen und zwei Detektoren vorzusehen sein. Daher sind in einer besonders bevorzugten Ausführungsform die zwei Detektoren derart zueinander angeordnet, dass sie die Codiermittel in einem wirksamen Abstand D detektieren, wobei der Abstand D in der Größenordnung der Ausmaße der Codiermittel liegt. Somit kann in vorteilhafter Weise, beispielsweise bei einer optischen Detektion der Codiermittel, eine Gabellichtschranke verwendet werden, die als einheitliche Baugruppe kommerziell erhältlich ist und lediglich eine Lichtquelle umfasst.

Wie eingangs schon ausgeführt, kann in erfindungsgemäßer Weise mit den zwei Detektoren detektiert werden, dass die Aufnahmeeinrichtung sich dann in einer Arretierstellung befindet, wenn die zwei Detektoren gleichzeitig Codiermittel detektieren. Hierzu ist in einer ganz besonders bevorzugten Ausführungsform die Codiereinrichtung derart ausgebildet, dass in jeder Arretierstellung der Aufnahmeeinrichtung an den von den Detektoren detektierten Stellen der Codiereinrichtung ein Codiermittel vorgesehen ist, das eine wirksame Breite B aufweist, die größer oder gleich dem wirksamen Abstand D der Detektoren ist. Mit wirksamer Breite B ist insbesondere das Ausmaß des Codiermittels gemeint, das entlang der Bewegungsrichtung bei einer Relativbewegung der Codiereinrichtung zum Detektor gemessen wird. Insbesondere wenn die zwei Detektoren in einem Abstand zueinander angeordnet sind, der in der Größenordnung der Codiermittel liegt, ist das entsprechende Codiermittel lediglich derart auszugestalten, dass die Bedingung B ≥ D erfüllt ist. Wenn die zwei Detektoren in einem geringen Abstand D zueinander angeordnet sind, kann die wirksame Breite B des Codiermittels ein klein wenig größer gewählt werden, was einer platzsparenden Ausgestaltung der Codiereinrichtung förderlich ist, da viele Codiermittel auf kleinem Raum angeordnet werden können.

Im Folgenden wird nun auf den Fall eingegangen, dass die Arretiereinrichtung einen sogenannten "Einfangbereich" aufweist, durch den sichergestellt wird, dass die Aufnahmeeinrichtung im wesentlichen aufgrund der Arretiereinrichtung positioniert und arretiert wird, wenn die Aufnahmeeinrichtung sich der Arretierstellung so weit nähert, dass sie in den Einfangbereich der Arretiereinrichtung kommt. So könnte nun die Codiereinrichtung derart ausgebildet sein, dass in jeder Arretierstellung der Aufnahmeeinrichtung an den von den Detektoren detektierten Stellen der Codiereinrichtung ein Codiermittel vorgesehen ist, das eine wirksame Breite B aufweist, die kleiner oder gleich der Breite E des Einfangbereichs der Arretiereinrichtung ist. Somit detektieren die zwei Detektoren das entsprechende Codiermittel, wenn die Aufnahmeeinrichtung sich im Einfangbereich einer Arretierstellung befindet, diese jedoch noch nicht endgültig eingenommen hat. Dies ist jedoch nicht nachteilig, da die Arretiereinrichtung in diesem Fall die verbleibende Feinpositionierung der Aufnahmeeinrichtung aufgrund ihrer besonderen Ausgestaltung selbst durchführt. Eine entsprechende Auswertung der Detektionssignale der zwei Detektoren kann jedoch dieses Einrastverhalten der Aufnahmeeinrichtung berücksichtigen.

In einer ganz besonders bevorzugten Ausführungsform ist insbesondere zur Detektion des zurückgelegten Wegs der Aufnahmeeinrichtung bei einer Drehung oder Bewegung die Codiereinrichtung derart ausgebildet, dass in dem Bereich der Codiereinrichtung, in dem die Detektoren detektieren, wenn die Aufnahmeeinrichtung sich zwischen zwei benachbarten Arretierstellungen befindet, mindestens zwei Codiermittel vorgesehen sind, die jeweils einen Abstand T zueinander aufweisen, der vorzugsweise im wesentlichen konstant ist. Der Bereich der Codiereinrichtung, in dem die Detektoren detektieren, wenn die Aufnahmeeinrichtung sich zwischen zwei benachbarten Arretierstellungen befindet, entspricht dem Bereich der Codiereinrichtung, der zwischen den beiden Codiermitteln liegt, die an den von den Detektoren detektierten Stellen der Codiereinrichtung angeordnet sind, wenn die Aufnahmeeinrichtung sich jeweils in den zwei benachbarten Arretierstellungen befindet. Der Einfachheit halber wird dieser Bereich der Codiereinrichtung im Folgenden als Zwischenbereich der Codiereinrichtung bezeichnet. Da die zwei Detektoren an unterschiedlichen Stellen die Codiermittel der Codiereinrichtung detektieren, kann durch die zeitliche Abfolge der Detektionssignale der Detektoren die Drehrichtung beziehungsweise die Bewegungsrichtung der Aufnahmeeinrichtung bestimmt werden. Dies ist insbesondere dann vorteilhaft, wenn keine Motoransteuerung zur Bewegung beziehungsweise Drehung der Aufnahmeeinrichtung vorgesehen ist, die durch eine entsprechende Ansteuerung die Drehrichtung vorgibt und daher schon bekannt ist.

Im Konkreten könnte beispielsweise eine Aufnahmeeinrichtung, die fünf optische Bauteile aufnimmt und somit fünf unterschiedliche Arretierstellungen aufweist, in einem Zwischenbereich der Codiereinrichtung fünf Codiermittel aufweisen, die jeweils zueinander einen konstanten Abstand T1 aufweisen. Während der Drehung oder Bewegung der Aufnahmeeinrichtung von der einen zu der benachbarten Arretierstellung detektieren nun die zwei Detektoren jeweils die fünf Codiermittel, d.h. jeder Detektor detektiert die fünf Codiermittel dieses Zwischenbereichs der Codiereinrichtung. Falls nun in einem benachbarten Zwischenbereich der Codiereinrichtung beispielsweise sechs Codiermittel in einem jeweils konstanten Abstand T2 vorgesehen sind, detektieren die zwei Detektoren jeweils sechs Codiermittel, wenn sich die Aufnahmeeinrichtung von der einen zu der entsprechenden anderen Arretierstellung bewegt. In diesem Beispiel ist der Abstand T1 in dem Bereich, in dem fünf Codiermittel vorgesehen sind, ein anderer als in dem Bereich, in dem sechs Codiermittel vorgesehen sind, nämlich die Abstände untereinander betragen in dem einen Zwischenbereich jeweils T1 = 1/6 * L1 und in dem anderen Zwischenbereich jeweils T2 = 1/7 * L2. L1 ist hierbei die Länge des Zwischenbereichs mit fünf Codiermitteln, L2 entspricht der Länge des Zwischenbereichs mit sechs Codiermitteln. Wenn in dem Bereich mit der Länge L1 fünf Codiermittel mit jeweils konstanten Abstand zueinander vorgesehen sind, entspricht das sechs gleichlangen Zwischenräumen mit einer Länge von jeweils T1. Durch die Auswertung der Anzahl der detektierten Codiermittel in den jeweiligen Zwischenbereichen der Codiereinrichtung kann somit auf die momentane Position der Aufnahmeeinrichtung geschlossen werden, so dass hierdurch eine Überprüfung der Bewegung der Aufnahmeeinrichtung möglich ist oder die von den Detektoren erzeugten Detektionssignale zur Regelung der Bewegung der Aufnahmeeinrichtung verwendet werden können. Selbstverständlich ist die Art, Anzahl und/oder Abfolge der Codiermittel der Codiereinrichtung in ihrer Relativposition zur Aufnahmeeinrichtung einer eventuell vorgesehenen Steuereinrichtung bekannt.

Die Codiereinrichtung könnte auch derart ausgebildet sein, dass in dem Bereich der Codiereinrichtung, in dem die Detektoren detektieren, wenn sich die Aufnahmeeinrichtung zwischen zwei benachbarten Arretierstellungen befindet, die Codiereinrichtung einen Bereich ohne Codiermittel aufweist, wobei die wirksame Breite L dieses Bereichs mindestens dem 1,1-fachen Abstand T zweier benachbarter Codiermittel entspricht, d.h. L ≥ 1,1 * T. In diesem Fall ist die Anzahl der Codiermittel in jedem Zwischenbereich der Codiereinrichtung gleich, beispielsweise neun. Der Abstand zweier benachbarter Codiermittel ist ebenfalls - abgesehen von dem Bereich ohne Codiermittel - im wesentlichen konstant, weist nämlich den Wert T auf. Der Bereich ohne Codiermittel weist insbesondere deshalb eine größere Breite L als der Abstand T zweier benachbarter Codiermittel auf, weil er hierdurch einfach detektierbar ist. So können beispielsweise neun Codiermittel in jedem Zwischenbereich der Codiereinrichtung vorgesehen sein, die jedoch mit einem konstanten Abstand T angeordnet sind, der dem entspricht, wenn elf Codiermittel in dem Zwischenbereich der Codiereinrichtung ohne Lücke und mit konstantem Abstand zueinander angeordnet wären.

Falls nun der Bereich ohne Codiermittel in unterschiedlichen Bereichen der Codiereinrichtung, in dem die Detektoren detektieren, wenn sich die Aufnahmeeinrichtung zwischen zwei benachbarten Arretierstellungen befindet, an jeweils einer anderen Stelle angeordnet ist, ermöglicht die Detektion der Abfolge der Codiermittel sowie des Bereichs ohne Codiermittel eines jeweiligen Zwischenbereichs der Codiereinrichtung Rückschlüsse auf die momentane Position der Aufnahmeeinrichtung. Auch hierbei kann eine Auswertung der von den zwei Detektoren erzeugten Detektionssignale einer Kontrolle der momentanen Position der Aufnahmeeinrichtung und/oder einer Regelung der Bewegung der Aufnahmeeinrichtung dienen. Insbesondere kann durch die Detektion der Codiermittel und deren Auswertung - beispielsweise in Form von Zählen entsprechender Pulse - festgestellt werden, ob die vorherige und gegebenenfalls die nächste Arretierstellung korrekt gewählt war. Hierzu wäre jedoch eine im wesentlichen gleichmäßige Dreh- beziehungsweise Bewegungsgeschwindigkeit der Aufnahmeeinrichtung vorauszusetzen, falls lediglich eine zeitliche Abfolge der Detektionssignale erfolgt.

Eine Automatisierung eines Gesamtsystems kann durch eine Motoreinrichtung erfolgen, die die Aufnahmeeinrichtung dreht oder bewegt. Die Motoreinrichtung umfasst vorzugsweise eine einen Motor steuernde oder regelnde Einheit. Hiermit kann beispielsweise eine unsymmetrische Bestückung der Aufnahmeeinrichtung bei der Ansteuerung bzw. Regelung des Motors berücksichtigt werden, wenn die Aufnahmeeinrichtung ein Objektivrevolver eines Mikroskops ist und dieser eine schiefe Einbaulage aufweist. Durch die unsymmetrische Bestückung ist bei der schiefen Einbaulage eine an die jeweilige Drehposition des Objektivrevolvers angepasste Regelung des Motors erforderlich, um nämlich ein zur Drehung erforderliches veränderliches Drehmoment zur Verfügung stellen zu können. Als Motor könnte insbesondere ein Gleichstrom-Elektromotor vorgesehen sein. Falls der Objektivrevolver trotz unsymmetrischer Bestückung eine horizontale Einbaulage aufweist, ist eine Motorregelung nicht zwingend erforderlich und eine Geschwindigkeitssteuerung des Gleichstrom-Elektromotors kann mittels Anlegen unterschiedlicher Spannungen erfolgen.

Die Aufnahmeeinrichtung ist über eine Getriebeeinrichtung und/oder einer zur Übertragung der Drehbewegung des Motors auf die Aufnahmeeinrichtung dienende Übertragungseinrichtung mit dem Motor gekoppelt. Die Getriebeeinrichtung kann im Konkreten derart ausgelegt sein, dass die Gesamtübersetzung derart gewählt wird, dass eine kraftbeaufschlagt gelagerte Rolle oder Kugel einer Arretiereinrichtung beim Einrastvorgang in einer Rastkerbe den Motor gegen sein Anhaltemoment drehen kann. Als Übertragungseinrichtung zwischen Motor und Aufnahmeeinrichtung bzw. zwischen Motor mit Getriebe und Aufnahmeeinrichtung ist vorzugsweise ein Zahnriemen oder ein Zahnrad vorgesehen. Durch geeignete Wahl des Motors und der Gesamtübersetzung kann beispielsweise eine Positionierzeit eines Fluoreszenz-Filterrevolvers mit acht unterschiedlichen Filterblöcken von deutlich unter 0,6 Sekunden erzielt werden, wenn der jeweils kürzeste Weg zur Zielposition gewählt wird und deutlich unter einer Sekunde, wenn über den Drehwinkel von sieben Positionen (315°) gedreht wird, was in besonders vorteilhafter Weise die Gesamt-Aufnahmedauer einer automatischen Bildaufnahmeserie - beispielsweise in der Pathologie - mit unterschiedlichen Fluoreszenzen ganz erheblich verringern kann.

Zur Automatisierung eines Gesamtsystems ist eine Steuereinrichtung vorgesehen, die die Detektionssignale der zwei Detektoren verarbeitet und die die Motoreinrichtung ansteuert. Diese Steuereinrichtung könnte beispielsweise in Form eines Mikrokontrollers, der insbesondere ein EPROM oder ein EEPROM aufweist, realisiert werden. Insbesondere ist vorgesehen, dass die notwendigen Detektionen und Berechnungen von der Steuereinrichtung in Echtzeit gesteuert und durchgeführt werden. Vorzugsweise sind die Ausgangssignale der zwei Detektoren digital verarbeitbar. Dies kann beispielsweise mit Hilfe einer elektronischen Schaltung erfolgen, die die Signale der Detektoren einer Gabellichtschranke logisch derart verarbeitet, dass die elektronische Schaltung der Steuereinrichtung ein Signal in digitaler Form zuführt. Die elektronische Schaltung könnte unmittelbar bei der Gabellichtschranke angeordnet sein, so dass die elektronische Schaltung nur digitale Signale über beispielsweise ein bestehendes Bussystem der Steuereinrichtung zuführt.

Ganz allgemein könnte die hier vorliegende Erfindung zur Positionierung einer beliebigen Einheit dienen, die also nicht unbedingt zur Aufnahme optischer Bauteile geeignet sein muss. Eine konkrete Anwendung der hier vorliegenden Erfindung kann beispielsweise durch eine Aufnahmeeinrichtung erfolgen, die als Revolver zur Aufnahme von Mikroskopobjektiven ausgeführt ist. Eine weitere Anwendung könnte beispielsweise darin bestehen, dass die Aufnahmeeinrichtung in Form eines Magazins zur Aufnahme von Filtersätzen ausgeführt ist, das beispielsweise bei einem Fluoreszenzmikroskop eingesetzt und entsprechend zu Positionieren ist. Die optischen Bauteile sind in der Aufnahmeeinrichtung vorzugsweise justiert angeordnet, was bei der Mikroskopie grundsätzlich der Fall ist und durch Objektivgewinde am Revolver mit entsprechender Fertigungsgenauigkeit sichergestellt ist.

In verfahrensmäßiger Hinsicht wird die eingangs genannte Aufgabe durch die Merkmale des Patentanspruchs 8 gelöst.

Das erfindungsgemäße Verfahren eignet sich insbesondere zum Betrieb einer Vorrichtung nach einem der Ansprüche 1 bis 7, so dass zur Vermeidung von Wiederholungen auf den vorangegangenen Teil der Beschreibung verwiesen wird.

Zur Initialisierung der Vorrichtung zum Positionieren eines optischen Bauteils erfolgt eine Drehung bzw. Bewegung der Aufnahmeeinrichtung über mindestens eine Arretierstellung hinweg, wobei die Detektionssignale der zwei Detektoren detektiert und ausgewertet werden. Hierdurch kann beispielsweise festgestellt werden, in welcher Position die als Objektivrevolver ausgeführte Aufnahmeeinrichtung eines Mikroskops sich kurz nach einem Einschaltvorgang befindet, wobei der Objektivrevolver im ausgeschalteten Zustand des Mikroskops manuell verstellt worden sein könnte.

Somit kann mit der erfindungsgemäßen Vorrichtung bzw. mit dem erfindungsgemäßen Verfahren der Bauteilaufwand der Codier- und Detektionsmittel in ganz besonders vorteilhafter Weise reduziert werden, was letztendlich eine einfachere Montage und Funktionsüberprüfung ermöglicht. Die Codiereinrichtung kann in Form eines einfach herzustellenden Incrementerrings ausgeführt werden, der mit geringem Justieraufwand an die Aufnahmeeinrichtung montiert werden kann. Die Aufnahmeeinrichtung kann mit hoher Geschwindigkeit gedreht beziehungsweise bewegt werden, ein kontrolliertes und rechtzeitiges Abbremsen ist ebenfalls möglich. Es ist stets kontrollierbar, ob die Aufnahmeeinrichtung sich in einer Arretierstellung befindet, eine Fehlpositionierung der Aufnahmeeinrichtung wird während der Drehung bzw. Bewegung der Aufnahmeeinrichtung sicher erkannt. Somit ist auch eine Korrektur der Positionierung der Aufnahmeeinrichtung sofort möglich, wenn aus irgend einem Grund während der Positionierung eine Fehlfunktion auftritt, die das korrekte Einrasten der Aufnahmeeinrichtung verhindert. So könnten mögliche Fehlfunktionen elektrische oder mechanische Fehler sein, wenn beispielsweise innerhalb einer bestimmten Zeit die Positionierung nicht korrekt abgeschlossen wurde. Durch einen Software-Timeout kann dann die Motorspannung ausgestaltet und eine Fehlermeldung erzeugt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung einer perspektivischen Ansicht eines ersten Ausführungsbeispiels der vorliegenden Erfindung,
- Fig. 2: eine schematische Darstellung einer Aufsicht des Ausführungsbeispiels aus Fig. 1,
- Fig. 3: eine schematische Darstellung eines Diagramms der analogen Detektionssignale der zwei Detektoren, wobei die Relativbewegung zwischen Codiereinrichtung und den zwei Detektoren angedeutet ist,
- Fig. 4: eine schematische Darstellung in Form von Diagrammabschnitten, die die digitalen Detektionsignale der zwei Detektoren bei unterschiedlichen Drehrichtungen der Aufnahmeeinrichtung zeigt, wobei ein Teil der Codiereinrichtung und ein Teil der Arretiereinrichtung gezeigt ist,
- Fig. 5: eine schematische Darstellung der Anordnung der Codiermittel in acht unterschiedlichen Zwischenbereichen der Codiereinrichtung, die auch in den Fig. 1 und 2 gezeigt ist und
- Fig. 6: eine schematische Darstellung einer Schaltung zur Auswertung der analogen Detektionsignale der zwei Detektoren.

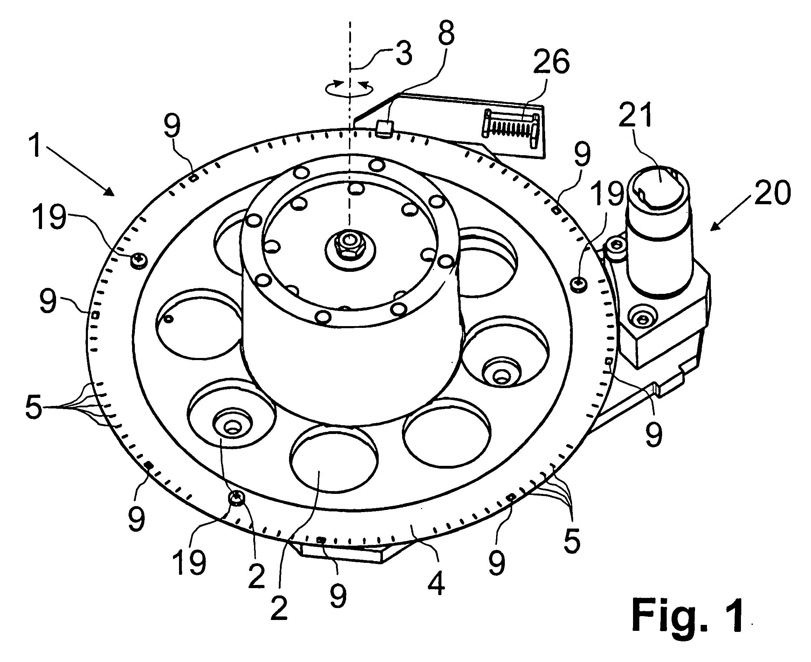

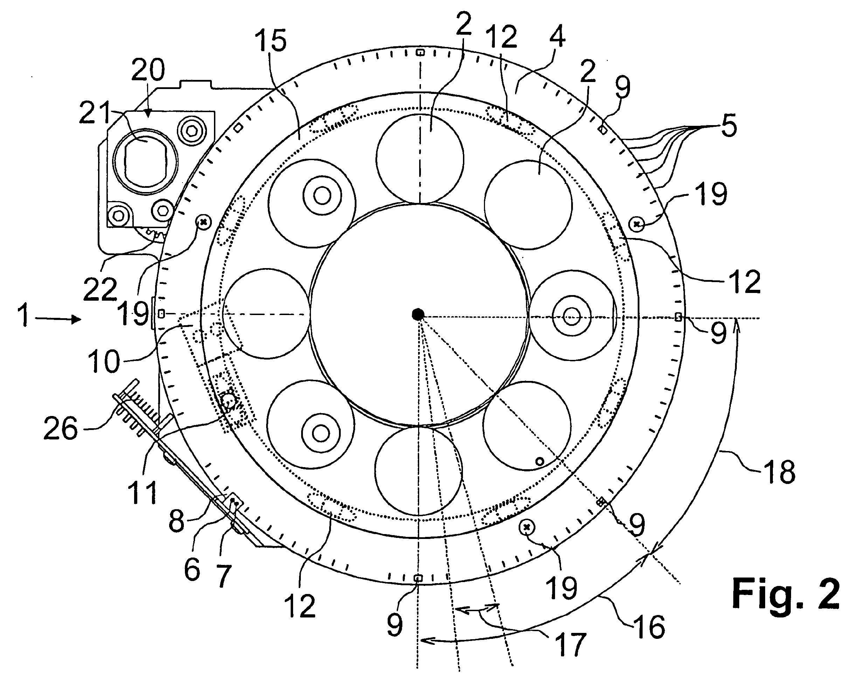

Die Fig. 1 und 2 zeigen eine Vorrichtung zum Positionieren optischer Bauteile, wobei mehrere optische Bauteile in einer als Fluoreszenz-Filterrevolver ausgeführten Aufnahmeeinrichtung 1 angeordnet werden können. Die optischen Bauteile sind in diesem Fall Fluoreszenzfilter, die jeweils an den insgesamt acht Strahldurchgängen 2 angeordnet werden. Die optischen Bauteile sind in den Fig. 1 und 2 nicht gezeigt. Die Aufnahmeeinrichtung 1 ist um die Achse 3 drehbar angeordnet, und zwar in zwei entgegengesetzte Drehrichtungen, was mit dem in Fig. 1 gezeigten Doppelpfeil angedeutet ist. Mit der Aufnahmeeinrichtung 1 ist jeweils ein optisches Bauteil in dem Strahlengang eines nicht gezeigten Mikroskops positionierbar, wobei die Aufnahmeeinrichtung 1 hierzu in einer entsprechenden Arretierstellung arretierbar ist.

Den Fig. 1 und 2 ist entnehmbar, dass der Aufnahmeeinrichtung 1 eine Codiereinrichtung 4 zugeordnet ist, die Codiermittel 5 und 9 aufweist. Die Codiereinrichtung 4 ist in Form einer ringförmigen Scheibe ausgebildet, die mit den drei in den Fig. 1 und 2 gezeigten Schrauben 19 fixiert und gleichzeitig justiert sind. Die Codiermittel 5 und 9 der Codiereinrichtung 4 werden mit zwei Detektoren 6 und 7 detektiert, die in der Gabellichtschranke 8 angeordnet sind, was in Fig. 2 schematisch gezeigt ist. Die zwei Detektoren 6 und 7 detektieren die Codiermittel 5 an räumlich unterschiedlichen Stellen der Codiereinrichtung 4.

Erfindungsgemäß ist die Codiereinrichtung 4 derart ausgebildet, dass einerseits die zwei Detektoren 6 und 7 gleichzeitig ein Codiermittel 9 detektieren, wenn die Aufnahmeeinrichtung 1 sich in einer Arretierstellung befindet. Andererseits ist die Codiereinrichtung 4 derart ausgebildet, dass nur jeweils einer der zwei Detektoren 6 und 7 Codiermittel 5 detektiert, wenn die Aufnahmeeinrichtung 1 sich in einem Bereich zwischen zwei benachbarten Arretierstellungen befindet.

Die Codiermittel 5 und 9 werden mit Hilfe einer Gabellichtschranke 8 optisch detektiert, wobei die Codiermittel 5 und 9 jeweils in Form von Schlitzen in der ringförmigen Scheibe ausgeführt sind. Die Schlitze 5 haben hierbei eine Breite von zirka 0,15 mm, die Schlitze 9 hingegen haben eine breite von zirka 2,5 mm. Die Schlitze 5 und 9 sind quer zur Bewegungsrichtung der Aufnahmeeinrichtung 1 angeordnet, d.h. die langen Seitenkanten der Schlitze 5 und zwei der Seitenkanten der Schlitze 9 verlaufen in radialer Richtung bezogen zur Achse 3 der Aufnahmeeinrichtung 1.

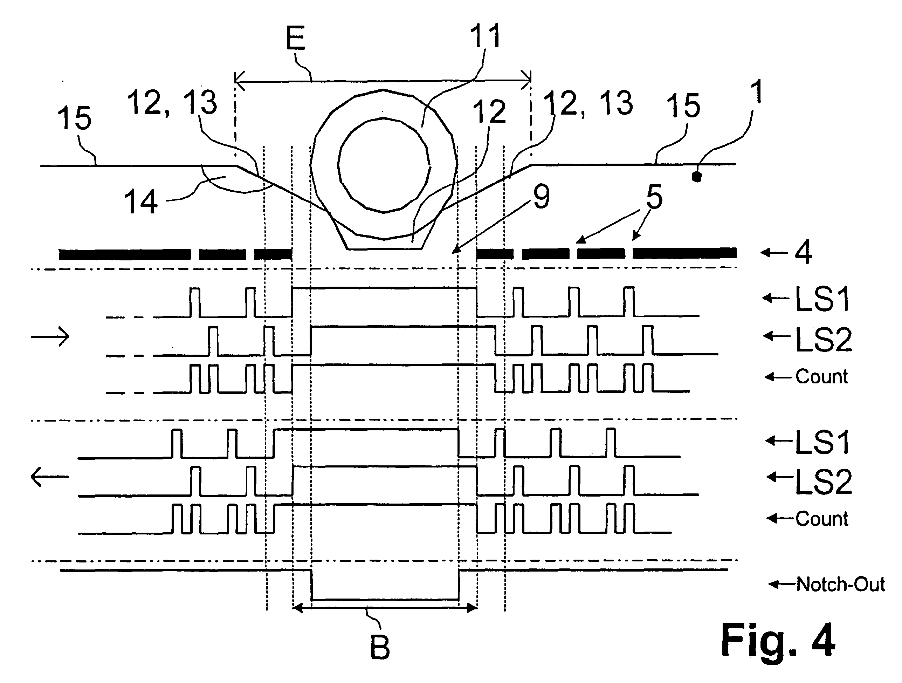

In Fig. 2 ist gezeigt, dass eine ortsfest angeordnete Arretiereinrichtung 10 vorgesehen ist, die die Aufnahmeeinrichtung 1 in einer Arretierstellung arretiert. Die Arretiereinrichtung 10 ist ortsfest an dem Teil der Aufnahmeeinrichtung 1 angebracht, der nicht gedreht wird und somit mittelbar am Mikroskopstativ angeordnet ist. Die Arretiereinrichtung 10 arretiert die Aufnahmeeinrichtung 1 auf mechanischer Basis, und zwar indem eine kraftbeaufschlagt gelagerte Kugel 11 in eine der acht bei der Aufnahmeeinrichtung 1 vorgesehenen Rastkerben 12 drückt. Die kraftbeaufschlagt gelagerte Kugel 11 ist in der Arretiereinrichtung 10 derart angeordnet, dass die Kraft in eine Richtung wirkt, die in der Aufsicht-Darstellung aus Fig. 2 nach oben aus der Darstellungsebene heraus gerichtet ist. Der in Fig. 2 gezeigte arretierte Zustand der Aufnahmeeinrichtung 1 ist in einer schematischen Seitenansicht im oberen Bereich der Fig. 4 gezeigt. Die Rastkerbe 12 umfasst zwei in Form von abgeschrägten Flächen ausgebildete Einfangsrampen 13, die in einem stumpfen Winkel 14 zu der Oberfläche 15 der Aufnahmeeinrichtung 1 angeordnet ist, auf der die Rolle 11 im nicht arretierten Zustand abrollt. In Fig. 2 ist der Bereich der Oberfläche 15, auf dem die Rolle 11 im nicht arretierten Zustand abrollt gestrichelt angedeutet. Falls nun die Aufnahmeeinrichtung 1 sich einer Arretierstellung annähert, wird die kraftbeaufschlagt gelagerte Rolle 11 zunächst entlang einer Einfangsrampe 13 abrollen, bis sie bezüglich der Rastkerbe 12 mittig angeordnet ist und somit die Aufnahmeeinrichtung 1 in der entsprechenden Arretierstellung arretiert ist. Die Rolle 11 wird mit einer nicht gezeigten Feder kraftbeaufschlagt, wobei die Federkonstante dieser Feder derart bemessen ist, dass die Aufnahmeeinrichtung 1 auf Grund der Federkraft in die Arretierstellung gedreht wird.

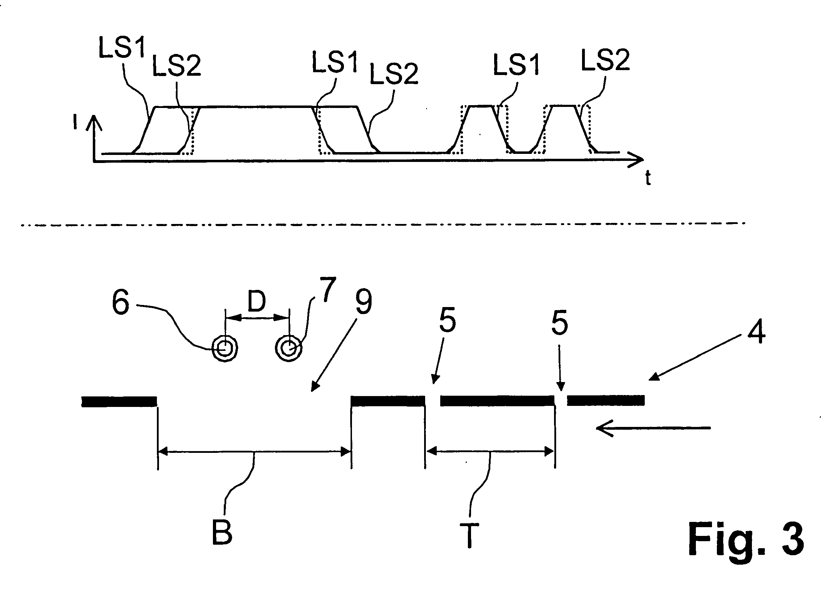

In Fig. 3 ist gezeigt, dass die zwei Detektoren 6 und 7 in einem Abstand D zueinander angeordnet sind, so dass die Codiermittel 5 und 9 in diesem wirksamen Abstand D von den zwei Detektoren 6 und 7 detektiert werden. Der Abstand D der zwei Detektoren 6 und 7 beträgt zirka 0,8 mm. Somit liegt der Abstand D in der Größenordnung der Schlitzbreite der Codiermittel 5 und 9.

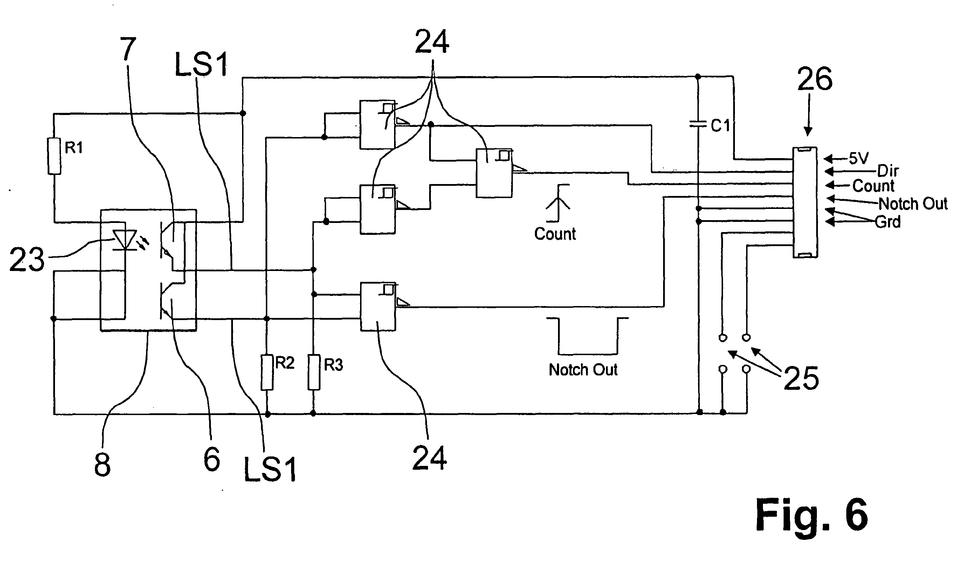

In Fig. 3 ist die Intensität der analogen Ausgangssignale LS1 und LS2 der zwei Detektoren 6 und 7 als Funktion der Zeit gezeigt, wobei die im unteren Bereich der in Fig. 3 zum Teil gezeigten Codiereinrichtung 4 sich von rechts nach links - wie mit dem unteren Pfeil angedeutet - zusammen mit der Aufnahmeeinrichtung 1 bewegt. In dem oberen Diagramm Fig. 3 sind die von der elektronischen Schaltung aus Fig. 6 erzeugten digitalen Signale gestrichelt dargestellt.

Den Fig. 1 und 2 ist deutlich entnehmbar, dass die Codiereinrichtung 4 derart ausgebildet, dass in jeder Arretierstellung der Aufnahmeeinrichtung 1 an den von den Detektoren 6 und 7 detektierten Stellen der Codiereinrichtung 4 jeweils ein Codiermittel 9 vorgesehen ist. Die Codiermittel 9 weisen eine wirksame Breite B auf, die größer als der wirksame Abstand D der zwei Detektoren 6 und 7 ist. Zugleich ist die wirksame Breite B der Codiermittel 9 kleiner als die Breite E des Einfangbereichs, der durch die Breite der Rastkerbe 12 zusammen mit den beiden Einfangsrampen 13 gebildet ist.

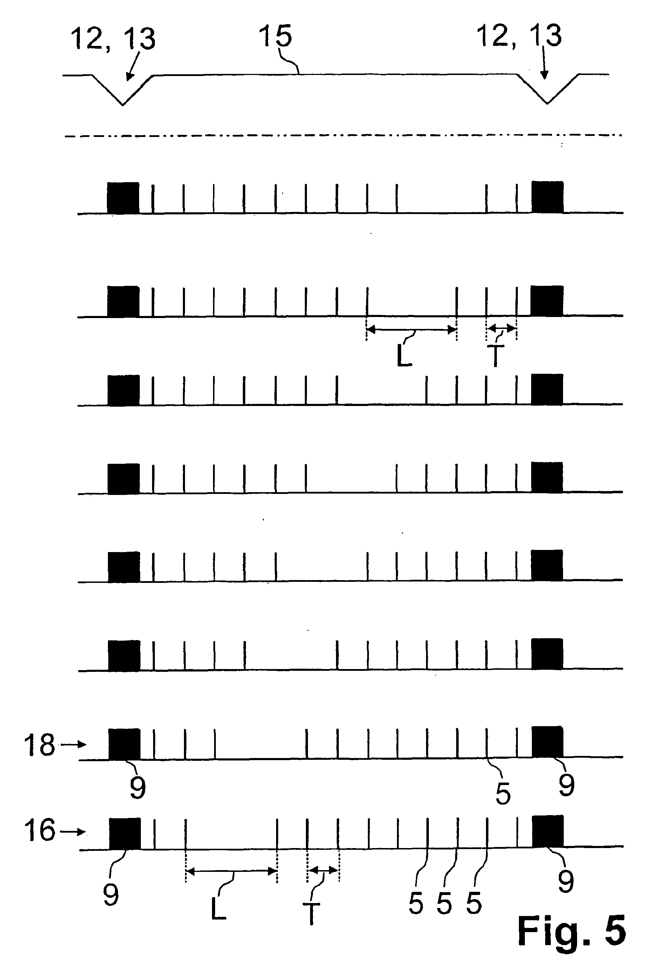

Die Codiereinrichtung 4 ist derart ausgebildet, das in dem Bereich der Codiereinrichtung 4, in dem die zwei Detektoren 6 und 7 detektieren, wenn die Aufnahmeeinrichtung 1 sich zwischen zwei benachbarten Arretierstellungen befindet, elf Codiermittel 5 vorgesehen sind. Einer dieser Bereiche ist in Fig. 2 mit dem Bezugszeichen 16 gekennzeichnet und wird im folgenden Zwischenbereich der Codiereinrichtung 4 bezeichnet. Abgesehen von einem Bereich 17, in dem keine Codiermittel 5 vorgesehen sind, sind die Codiermittel 5 im Bereich 16 jeweils in einem konstanten Abstand T zueinander angeordnet. Die wirksame Breite L des Bereichs ohne Codiermittel 5 entspricht dem dreifachen Abstand T. Die Abfolge der Codiermittel 9 und 5 des Bereichs 16 sind schematisch in dem untersten Diagramm aus Fig. 5 in Abhängigkeit der umfangsmäßigen Anordnung der Codiermittel 9 und 5 gezeigt. Das Diagramm darüber aus Fig. 5 zeigt die Abfolge der Codiermittel 9 und 5 des Bereichs 18, der an den Bereich 16 angrenzt. Hierbei ist das rechts gezeigte Codiermittel 9 des Bereichs 16 identisch mit dem links gezeigten Codiermittel 9 des Bereichs 18. Die schematischen Diagramme darüber zeigen jeweils die Abfolge der übrigen Zwischenbereiche der Codiereinrichtung 4, wie sie zusammenhängend in den Fig. 1 und 2 gezeigt sind. Die oberste, in Fig. 5 gezeigte schematische Darstellung zeigt zum einen - vereinfacht - die Rastkerbe 12 samt Einfangsrampen 13 sowie die Oberfläche 15 der Aufnahmeeinrichtung 1, auf der die Rolle 11 der Arretiereinrichtung 10 abrollt, wobei hier ganz besonders deutlich erkennbar ist, dass Codiereinrichtung 4 zur Aufnahmeeinrichtung 1 derart angeordnet ist, dass an den Stellen der Codiermittel 9 jeweils eine Rastkerbe 12 vorgesehen ist.

Sowohl den Fig. 1 und 2 als auch Fig. 5 ist entnehmbar, das der Bereich ohne Codiermittel 5 - also z.B. der Bereich 17 des Bereichs 16 - jeweils an einer anderen Stelle des jeweiligen Zwischenbereichs der Codiereinrichtung 4 angeordnet ist. Letztendlich sind in jedem Zwischenbereich der Codiereinrichtung 4 die elf Codiermittel 5 derart angeordnet, als wären es dreizehn im gleichen Abstand T zueinander angeordnete Codiermittel 5, von denen jedoch jeweils zwei an jeweils einer anderen Stelle des jeweiligen Zwischenbereichs der Codiereinrichtung 4 weggelassen wurden.

Bei dem Ausführungsbeispiel aus den Fig. 1 und 2 ist eine Motoreinrichtung 20 vorgesehen, die die Aufnahmeeinrichtung 1 dreht. Die Motoreinrichtung 20 weist einen Motor 21 auf, der ortsfest an dem Teil der Aufnahmeeinrichtung 1 angebracht ist, der sich nicht dreht. Der Motor 21 ist ein Gleichstrom-Elektromotor. Fig. 2 ist andeutungsweise entnehmbar, dass eine in Form eines Zahnrads 22 ausgebildete Übertragungseinrichtung vorgesehen ist, die die Drehbewegung des Motors 21 auf den drehenden Teil der Aufnahmeeinrichtung 1 überträgt.

Fig. 6 zeigt das Schaltbild der elektronischen Schaltung, die einerseits die Gabellichtschranke 8 ansteuert und die die Detektionssignale, die die zwei Detektoren 7 und 8 erzeugen, ausliest, auswertet und in digitaler Form ausgibt. Die Gabellichtschranke 8 aus Fig. 6 ist ein kommerziell erhältliches Bauteil vom Typen TCUT1200, das eine Lichtquelle 23 aufweist. Die vier Bauteile 24 sind CMOS-IC's vom Typen 74HCT132. Mit dem Bezugszeichen 25 sind zwei Lötbrücken gekennzeichnet, mit denen die Ausführung des Revolvers, z. B. mit 4, 5 oder 8 Rasten, codiert werden kann. Diese Codierung ist aber nicht zwingend erforderlich, weil durch Zählen der Codiermittel 5 zwischen den Codiermitteln 9 auf die Ausführung des Revolvers geschlossen werden kann. Die elektronische Schaltung aus Fig. 6 liefert unter anderem an ihrer 8-poligen Ausgangsschnittstelle 26 digitale Ausgangssignale, deren Verlauf in Abhängigkeit von der Drehbewegung der Aufnahmeeinrichtung 1 in Fig. 4 gezeigt sind. An dem Ausgang Count liegen die mittels einer ODER-Verknüpfung erzeugten Pulse an, die dann erzeugt werden, wenn nur jeweils einer der zwei Detektoren 6 und 7 ein Codiermittel 5 detektiert, wenn also die Aufnahmeeinrichtung 1 sich in einem Bereich zwischen zwei benachbarten Arretierstellungen befindet. An dem Ausgang Notch-Out liegen die mit einer NAND-Verknüpfung erzeugten Pulse an, die dann erzeugt werden, wenn zwei Detektoren 6 und 7 gleichzeitig ein Codiermittel 9 detektieren, also die Aufnahmeeinrichtung 1 sich in einer Arretierstellung befindet.

In Fig. 4 sind - schematisch in Diagrammform - die digitalen Signale LS1, LS2 und Count der elektronischen Schaltung aus Fig. 6 jeweils bei einer Bewegung des im oberen Teil Fig. 4 gezeigten Teils der Codiereinrichtung 4 einerseits von links nach rechts und andererseits von rechts nach links gezeigt, was jeweils mit dem Pfeil auf der linken Seite der Fig. 4 angedeutet ist. Weiterhin ist mit dem untersten schematischen Diagramm aus Fig. 5 das Notch-Out Signal der elektronischen Schaltung aus Fig. 6 gezeigt.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Aufnahmeeinrichtung
- 2: Strahldurchgang
- 3: Drehachse von (1)
- 4: Codiereinrichtung
- 5: Codiermittel
- 6: erster Detektor
- 7: zweiter Detektor
- 8: Gabellichtschranke
- 9: Codiermittel, das von (6) und (7) detektiert wird, wenn (1) sich in einer Arretierstellung befindet
- 10: Arretiereinrichtung
- 11: Kugel von (10)
- 12: Rastkerbe von (10)
- 13: Einfangsrampe von (12)
- 14: stumpfer Winkel zwischen (13) und (15)
- 15: Oberfläche von (1), auf der (11) im nicht arretierten Zustand abrollt
- 16: Bereich von (4), in dem (6) und (7) detektieren, wenn (1) sich zwischen zwei benachbarten Arretierstellungen befindet
- 17: Bereich in (16), in dem keine Codiermittel (5) vorgesehen sind
- 18: zu (16) benachbarter Bereich von (4)
- 19: Schrauben zum Fixieren und Justieren von (4) an (1)
- 20: Motoreinrichtung
- 21: Motor von (20)
- 22: Zahnrad
- 23: Lichtquelle von (8)
- 24: 74HCT132
- 25: Lötbrücke
- 26: Ausgangsschnittstelle der elektronischen Schaltung aus Fig. 6
- D: Abstand zwischen (6) und (7)
- B: Breite der Codiermittel (9)
- E: Breite des Einfangbereichs, der durch (12) zusammen mit (13) gebildet ist
- T: Abstand zwischen zwei benachbarten Codiermitteln (5)
- L: Bereich von (4), in dem keine Codiermittel (5) angeordnet sind

## Patentansprüche

1. Vorrichtung zum Positionieren eines optischen Bauteils, umfassend
eine Aufnahmeeinrichtung (1), in der das optische Bauteil zusammen mit mehreren optischen Bauteilen angeordnet werden kann, und die um eine Achse (3) drehbar oder entlang einer Richtung bewegbar ist;
eine Arretiereinrichtung (10), mit der die Aufnahmeeinrichtung (1) in mehreren Arretierstellungen arretierbar ist, wobei das optische Bauteil durch Anfahren in eine entsprechende Arretierstellung positionierbar ist;
eine Codiereinrichtung (4) mit mehreren Codiermitteln (5,9), zur Erfassung der Bewegung der Aufnahmeeinrichtung (1);
sowie mehrere Detektoren (6,7), die an räumlich unterschiedlichen Stellen die Codiermittel (5,9) detektieren;
**dadurch gekennzeichnet,**
- **dass** die Codiereinrichtung (4) derart ausgebildet ist, dass sie genau zwei Detektoren (6, 7) aufweist, die einerseits gleichzeitig Codiermittel (9) detektieren, wenn die Aufnahmeeinrichtung (1) sich in einer Arretierstellung befindet,
- und **dass** andererseits nur jeweils einer der zwei Detektoren (6, 7) Codiermittel (5) detektiert, wenn die Aufnahmeeinrichtung (1) sich in einem Bereich (16, 18) zwischen zwei benachbarten Arretierstellungen befindet,
- wobei in jeder Arretierstellung der Aufnahmeeinrichtung (1) an den von den zwei Detektoren (6,7) detektierten Stellen der Codiereinrichtung (4) ein Codiermittel (9) vorgesehen ist, das eine wirksame Breite B aufweist, die größer oder gleich dem wirksamen Abstand D der beiden Detektoren (6,7) ist, das heißt B ≥ D.

2. Vorrichtung nach Anspruch 1, **dadurch gekennzeichnet,**
**dass** die Codiermittel (5, 9) elektronisch oder magnetisch oder optisch detektierbar sind.

3. Vorrichtung nach Anspruch 2, **dadurch gekennzeichnet,**
**dass** die Codiereinrichtung (4) derart ausgebildet ist, dass in jeder Arretierstellung der Aufnahmeeinrichtung (1) an den von den Detektoren (6,7) detektierten Stellen der Codiereinrichtung (4) ein Codiermittel (9) vorgesehen ist, das eine wirksame Breite B aufweist, die kleiner oder gleich der Breite E des Einfangbereichs der Arretiereinrichtung (10) ist, der durch die Breite einer Rastkerbe (12) zusammen mit zwei Einfangsrampen (13) gebildet wird.

4. Vorrichtung nach einem der Ansprüche 1 bis 3, **dadurch gekennzeichnet,**
**dass** die Codiereinrichtung (4) derart ausgebildet ist, dass in dem Bereich (16, 18) der Codiereinrichtung (4), in dem die Detektoren (6, 7) detektieren, wenn die Aufnahmeeinrichtung (1) sich zwischen zwei benachbarten Arretierstellungen befindet, mindestens zwei Codiermittel (5) vorgesehen sind, die jeweils einen Abstand T zueinander aufweisen, der vorzugsweise im wesentlichen konstant ist.

5. Vorrichtung nach Anspruch 4, **dadurch gekennzeichnet,**
**dass** die Codiereinrichtung (4) derart ausgebildet ist, dass in dem Bereich (16,18) der Codiereinrichtung (4), in dem die Detektoren (6,7) detektieren, wenn sich die Aufnahmeeinrichtung (1) zwischen zwei benachbarten Arretierstellungen befindet, die Codiereinrichtung (4) einen Bereich (17) ohne Codiermittel aufweist, wobei die wirksame Breite L dieses Bereichs (17) mindestens dem 1,1-fachen Abstand zweier benachbarter Codiermittel (5) entspricht, d.h. L ≥ 1,1* T.

6. Vorrichtung nach Anspruch 5, **dadurch gekennzeichnet,**
**dass** dieser Bereich (17) ohne Codiermittel in unterschiedlichen Bereichen der Codiereinrichtung (4), in dem die Detektoren (6,7) detektieren, wenn sich die Aufnahmeeinrichtung (1) zwischen zwei benachbarten Arretierstellungen befindet, an jeweils einer anderen Stelle zwischen zwei benachbarten Arretierstellungen angeordnet ist.

7. Vorrichtung nach einem der Ansprüche 1 bis 6, **dadurch gekennzeichnet,**
**dass** eine Motoreinrichtung (20) vorgesehen ist, die die Aufnahmeeinrichtung (1) dreht oder bewegt.

8. Verfahren zum Positionieren eines optischen Bauteils, das zusammen mit mehreren optischen Bauteilen in einer Aufnahmeeinrichtung (1) angeordnet ist, welche um eine Achse (3) drehbar oder entlang einer Richtung bewegbar ist und mit einer Arretiereinrichtung (10) in mehreren Arretierstellungen arretierbar ist, und wobei das optische Bauteil durch Anfahren in eine entsprechende Arretierstellung positionierbar ist, und wobei der Aufnahmeeinrichtung (1) zur Erfassung ihrer Bewegung eine Codiereinrichtung (4) mit mehreren Codiermitteln (5,9) und zwei die Codiermittel (5,9) detektierende Detektoren 6,7) zugeordnet ist bzw. sind und wobei die zwei Detektoren 6,7) an räumlich unterschiedlichen Stellen die Codiermittel (5,9) detektieren,
**dadurch gekennzeichnet, daß**
- einerseits mit den zwei Detektoren (6, 7) gleichzeitig Codiermittel (9) detektiert werden und Detektionssignale erzeugt werden, wenn die Aufnahmeeinrichtung (1) sich in einer Arretierstellung befindet,
- und dass andererseits nur jeweils mit einem der zwei Detektoren (6, 7) Codiermittel (5) detektiert werden und ein Detektionssignal erzeugt wird, wenn die Aufnahmeeinrichtung (1) sich in einem Bereich (16, 18) zwischen zwei benachbarten Arretierstellungen befindet
- wobei in jeder Arretierstellung der Aufnahmeeinrichtung (1) an den von den zwei Detektoren (6,7) detektierten Stellen der Codiereinrichtung (4) ein Codiermittel (9) vorgesehen ist, das eine wirksame Breite B aufweist, die größer oder gleich dem wirksamen Abstand D der beiden Detektoren (6,7) ist, das heißt B ≥ D.

9. Verfahren nach Anspruch 8, **dadurch gekennzeichnet,**
**dass** eine Initialisierung beim Positionieren des optischen Bauteils durch Drehung bzw. Bewegung der Aufnahmeeinrichtung (1) über mindestens eine Arretierstellung hinweg erfolgt, wobei die Detektionssignale der zwei Detektoren (6, 7) detektiert und ausgewertet werden.

10. Verfahren nach Anspruch 8, **dadurch gekennzeichnet,**
**dass** durch Detektion der Abfolge der Codiermittel sowie eines Bereichs der Codiereinrichtung, der keine Codiermittel aufweist, ein Signal abgeleitet wird, das die momentane Position der Aufnahmeeinrichtung angibt.

11. Verfahren nach Anspruch 10, **dadurch gekennzeichnet,**
**dass** mit diesem Signal die Bewegung oder Positionierung der Aufnahmeeinrichtung gesteuert oder geregelt wird.

## Claims

1. Apparatus for positioning an optical component, comprising:
a receiving device (1) in which the optical component can be arranged together with a plurality of optical components, and which is rotatable about an axis (3) or movable along a direction;
a retaining device (10) by which the receiving device (1) can be retained in a plurality of retention positions, the optical component being positionable by travelling into a corresponding retention position;
a coding device (4) having a plurality of coding means (5, 9) for recording the movement of the receiving device (1);
and a plurality of detectors (6, 7) which detect the coding means (5, 9) at spatially different positions;
**characterized in that**
- the coding device (4) is designed so that it comprises precisely two detectors (6, 7), which on the one hand detect coding means (9) simultaneously when the receiving device (1) lies in a retention position,
- and **in that** on the other hand only one of the two detectors (6, 7) detects coding means (5) when the receiving device (1) lies in a region (16, 18) between two adjacent retention positions,
- a coding means (9), which has an effective width B that is greater than or equal to the effective spacing D of the two detectors (6, 7) i.e. B ≥ D, being provided in each retention position of the receiving device (1) at the positions of the coding device (4) detected by the two detectors (6, 7).

2. Apparatus according to Claim 1, **characterized in that** the coding means (5, 9) are electronically or magnetically or optically detectable.

3. Apparatus according to Claim 2, **characterized in that** the coding device (4) is designed so that a coding means (9), which has an effective width B that is less than or equal to the width E of the capture region of the retaining device (10) formed by the width of a locking notch (12) together with two capture ramps (13), is provided in each retention position of the receiving device (1) at the positions of the coding device (4) detected by the two detectors (6, 7).

4. Apparatus according to one of Claims 1 to 3, **characterized in that** the coding device (4) is designed so that at least two coding means (5), which respectively have a mutual spacing T that preferably is essentially constant, are provided in the region (16, 18) of the coding device (4) in which the detectors (6, 7) detect when the receiving device (1) lies between two adjacent retention positions.

5. Apparatus according to Claim 4, **characterized in that** the coding device (4) is designed so that the coding device (4) has a region (17) without coding means in the region (16, 18) of the coding device (4) in which the detectors (6, 7) detect when the receiving device (1) lies between two adjacent retention positions, the effective width L of this region (17) corresponding to at least 1.1 times the distance between two adjacent coding means (5) i.e. L ≥ 1.1*T.

6. Apparatus according to Claim 5, **characterized in that** this region (17) without coding means is respectively arranged at a different position between two adjacent retention positions in different regions of the coding device (4) in which the detectors (6, 7) detect when the receiving device (1) lies between two adjacent retention positions.

7. Apparatus according to one of Claims 1 to 6, **characterized in that** a motor device (20) is provided, which rotates or moves the receiving device (1).

8. Method for positioning an optical component, which is arranged together with a plurality of optical components in a receiving device (1) which is rotatable about an axis (3) or movable along a direction and can be retained in a plurality of retention positions by a retaining device (10), the optical component being positionable by travelling into a corresponding retention position, a coding device (4) with a plurality of coding means (5, 9) and two detectors (6, 7), which detect the coding means (5, 9), being assigned to the receiving device (1) in order to record its movement,
**characterized in that**
- on the one hand coding means (9) are detected simultaneously by the two detectors (6, 7) and detection signals are generated when the receiving device (1) lies in a retention position,
- and **in that** on the other hand coding means (5) are detected by only one of the two detectors (6, 7) and a detection signal is generated when the receiving device (1) lies in a region (16, 18) between two adjacent retention positions,
- a coding means (9), which has an effective width B that is greater than or equal to the effective spacing D of the two detectors (6, 7) i.e. B ≥ D, being provided in each retention position of the receiving device (1) at the positions of the coding device (4) detected by the two detectors (6, 7).

9. Method according to Claim 8, **characterized in that** initialization for positioning the optical component is carried out by rotating or moving the receiving device (1) across at least one retention position, the detector signals of the two detectors (6, 7) being detected and evaluated.

10. Method according to Claim 8, **characterized in that** a signal which indicates the instantaneous position of the receiving device is derived by detecting the sequence of the coding means and a region of the coding device which does not have any coding means.

11. Method according to Claim 10, **characterized in that** the movement or positioning of the receiving device is controlled or regulated using this signal.

## Revendications

1. Dispositif de positionnement d'un composant optique, comprenant .
- un dispositif de réception (1) dans lequel le composant optique peut être agencé avec plusieurs composants optiques et qui peut tourner autour d'un axe (3) ou est mobile dans une direction ;
- un dispositif d'arrêt (10) permettant d'arrêter le dispositif de réception (1) dans plusieurs positions d'arrêt, le composant optique pouvant être positionné par l'approche dans une position d'arrêt correspondante ;
- un dispositif de codage (4) avec plusieurs moyens de codage (5, 9) pour la détection du mouvement du dispositif de réception (1) ;
- ainsi que plusieurs détecteurs (6, 7) qui détectent les moyens de codage (5, 9) à des endroits différents dans l'espace ;
**caractérisé en ce que**
- le dispositif de codage (4) est réalisé de telle sorte qu'il présente exactement deux détecteurs (6, 7) qui détectent d'une part en même temps des moyens de codage (9) lorsque le dispositif de réception (1) se trouve dans une position d'arrêt ;
- et d'autre part, seulement respectivement l'un des deux détecteurs (6, 7) détecte des moyens de codage (5) lorsque le dispositif de réception (1) se trouve dans une zone (16, 18) entre deux positions d'arrêt voisines ;
- dans lequel, dans chaque position d'arrêt du dispositif de réception (1), aux endroits du dispositif de codage (4), détectés par les deux détecteurs (6, 7), un moyen de codage (9) est prévu qui présente une largeur effective B qui est supérieure ou égale à la distance effective D des deux détecteurs (6, 7), c'est-à-dire B ≥ D.

2. Dispositif selon la revendication 1, **caractérisé en ce que** les moyens de codage (5, 9) peuvent être détectés de façon électronique ou magnétique ou optique.

3. Dispositif selon la revendication 2, **caractérisé en ce que** le dispositif de codage (4) est réalisé de telle sorte que dans chaque position d'arrêt du dispositif de réception (1), aux endroits du dispositif de codage (4), détectés par les détecteurs (6, 7), un moyen de codage (9) est prévu qui présente une largeur effective B qui est inférieure ou égale à la largeur E de la zone de capture du dispositif d'arrêt (10) qui est formée par la largeur d'un cran (12) avec les deux rampes de capture (13).

4. Dispositif selon l'une quelconque des revendications 1 à 3, **caractérisé en ce que** le dispositif de codage (4) est réalisé de telle sorte que dans la zone (16, 18) du dispositif de codage (4) dans laquelle détectent les détecteurs (6, 7) lorsque le dispositif de réception (1) se trouve entre deux positions d'arrêt voisines, au moins deux moyens de codage (5) sont prévus qui présentent respectivement une distance T l'un par rapport à l'autre qui est de préférence substantiellement constante.

5. Dispositif selon la revendication 4, **caractérisé en ce que** le dispositif de codage (4) est réalisé de telle sorte que dans la zone (16, 18) du dispositif de codage (4), dans laquelle détectent les détecteurs (6, 7), lorsque le dispositif de réception (1) se trouve entre deux positions d'arrêt voisines, le dispositif de codage (4) présente une zone (17) sans moyens de codage, dans lequel la largeur effective L de cette zone (17) correspond au moins à 1,1 fois la distance de deux moyens de codage (5) voisins, c'est-à-dire L ≥ 1,1 * T.

6. Dispositif selon la revendication 5, **caractérisé en ce que** cette zone (17) sans moyen de codage est disposée dans différentes zones du dispositif de codage (4), dans lesquelles détectent les détecteurs (6, 7), lorsque le dispositif de réception (1) se trouve entre deux positions d'arrêt voisines, respectivement à un autre endroit entre deux positions d'arrêt voisines.

7. Dispositif selon l'une quelconque des revendications 1 à 6, **caractérisé en ce qu'**un dispositif moteur (20) est prévu qui fait tourner ou déplace le dispositif de réception (1).

8. Procédé de positionnement d'un composant optique qui est disposé avec plusieurs composants optiques dans un dispositif de réception (1) qui peut être tourné autour d'un axe (3) ou est mobile dans une direction et peut être arrêté par un dispositif d'arrêt (10) dans plusieurs positions d'arrêt, et dans lequel le composant optique peut être positionné par l'approche dans une position d'arrêt correspondante, et dans lequel on affecte au dispositif de réception (1) pour la détection de son mouvement, un dispositif de codage (4) avec plusieurs moyens de codage (5, 9) et deux détecteurs (6, 7) détectant les moyens de codage (5, 9), et dans lequel les deux détecteurs (6, 7) détectent les moyens de codage (5, 9) à des endroits différents dans l'espace,
**caractérisé en ce que**
- d'une part, les deux détecteurs (6, 7) détectent simultanément des moyens de codage (9) et produisent des signaux de détection lorsque le dispositif de réception (1) se trouve dans une position d'arrêt,
- et d'autre part, respectivement seulement l'un des deux détecteurs (6, 7) détecte des moyens de codage (5) et produit un signal de détection lorsque le dispositif de réception (1) se trouve dans une zone (16, 18) entre deux positions d'arrêt voisines,
- dans lequel dans chaque position d'arrêt du dispositif de réception (1), aux endroits du dispositif de codage (4), détectés par les deux détecteurs (6, 7), un moyen de codage (9) est prévu qui présente une largeur effective B qui est supérieure ou égale à la distance effective D des deux détecteurs (6, 7), c'est-à-dire B ≥ D.

9. Procédé selon la revendication 8, **caractérisé en ce qu'**une initialisation lors du positionnement du composant optique s'effectue par une rotation ou selon le cas un déplacement du dispositif de réception (1) au moins au-delà d'une position d'arrêt, les signaux de détection des deux détecteurs (6, 7) étant détectés et évalués.

10. Procédé selon la revendication 8, **caractérisé en ce que** par la détection de la séquence des moyens de codage, ainsi que d'une zone du dispositif de codage qui ne présente pas de moyens de codage, un signal est dérivé qui indique la position momentanée du dispositif de réception.

11. Procédé selon la revendication 10, **caractérisé en ce que** ce signal commande ou régule le déplacement ou le positionnement du dispositif de réception.
